# EUROPÄISCHE PATENTSCHRIFT

(11) **EP 3 014 569 B1**
(45) Veröffentlichungstag und Bekanntmachung des Hinweises auf die Patenterteilung: **05.08.2020**
(21) Anmeldenummer: 14732172.3
(22) Anmeldetag: 20.06.2014
(51) Int. Cl.: G06T 3/40, G06T 5/50, G06T 5/00, B60R 16/02, H04N 7/18, H04N 5/232

(54) **INSPEKTION DER KONTURIERTEN FLÄCHE DES UNTERBODENS EINES KRAFTFAHRZEUGS**
INSPECTION OF THE CONTOURED SURFACE OF THE UNDERBODY OF A MOTOR VEHICLE
INSPECTION DE LA SURFACE PROFILÉE DU DESSOUS DE CAISSE D'UN VÉHICULE À MOTEUR

(30) Priorität: 27.06.2013 DE 102013212495
(43) Veröffentlichungstag der Anmeldung: 04.05.2016
(73) Patentinhaber: Beissbarth GmbH, 80993 München (DE)
(72) Erfinder: NOBIS, Guenter, 72622 Nuertingen (DE); TAKAMI, Masato, 69115 Heidelberg (DE); UFFENKAMP, Volker, 71642 Ludwigsburg (DE)
(74) Vertreter: Schmitt-Nilson Schraud Waibel Wohlfrom Patentanwälte Partnerschaft mbB
(86) Internationale Anmeldenummer: PCT/EP2014/063040
(87) Internationale Veröffentlichungsnummer: WO 2014/206888

(56) Entgegenhaltungen:
- WO-A1-2012/046372
- US-A- 6 075 905
- US-A1- 2010 142 814
- US-B1- 7 102 665
- BURT P J ET AL: "Enhanced image capture through fusion", COMPUTER VISION, 1993. PROCEEDINGS., FOURTH INTERNATIONAL CONFERENCE O N BERLIN, GERMANY 11-14 MAY 1993, LOS ALAMITOS, CA, USA,IEEE COMPUTER SOCI, 11. Mai 1993 (1993-05-11), Seiten 173-182, XP010128631, DOI: 10.1109/ICCV.1993.378222 ISBN: 978-0-8186-3870-1

## Beschreibung

Die Erfindung betrifft ein Verfahren und eine Vorrichtung zur Inspektion einer konturierten Fläche, insbesondere des Unterbodens eines Kraftfahrzeugs.

### Stand der Technik

Die Kontrolle und Inspektion von Fahrzeugunterseiten wird schon seit Jahrzehnten durchgeführt. Vor allem staatliche Behörden haben großes Interesse an derartigen Untersuchungen, um versteckte Schmuggelware oder Bomben zu entdecken.

Vielfach wird dazu eine mobile Vorrichtung mit Rädern und einem Stab verwendet, an dem sich ein Spiegel befindet. Diese Form der manuell-optischen Inspektion hat den Vorteil, dass sie mobil einsetzbar ist. Jedoch wird der mittlere Teil des Fahrzeugunterbodens meist damit nicht erreicht. Mit dem Aufkommen digitaler Bildaufnahmetechnik wurde der Spiegel durch eine Kamera ersetzt (siehe z.B. US 2002 097 321 A1) oder eine ferngesteuerte Plattform mit einer oder mehreren Kameras bestückt (siehe z.B. WO 2004 110 054 A1). Neben einer verbesserten Reichweite ergibt sich dadurch auch die Möglichkeit zur Aufzeichnung und Speicherung von Bilddaten für eine verbesserte Prüfung des Unterbodens an einem Monitor, sowie die Möglichkeit zum Vergleich des aktuellen Zustandes des Unterbodens mit gespeicherten Referenzdaten in einer Datenbank.

Auch in den Kraftfahrzeug-Werkstätten ist die Kontrolle des Fahrzeugunterbodens bekannt als Serviceangebot im Rahmen einer Wartung. Einfach, jedoch aufwändig ist die direkte visuelle Inspektion durch eine Person in einer Inspektionsgrube oder an einer Hebebühne. Inspektionsgruben und Hebebühnen sind ortsgebunden und teuer und stehen wegen der Auslastung der Werkstatt auch nicht immer unmittelbar zur Verfügung.

Für manuelle Inspektionen der beschriebenen Art muss das Fahrzeug stationär sein und es muss von einer Person durchgeführt werden.

Weiterhin sind Verfahren und Vorrichtungen zur automatisierten Inspektion des Unterbodens bei rollendem Fahrzeug bekannt. Automatisch messende Systeme bieten den Vorteil, dass das Unterbodenbild rechnergestützt relativ einfach als Gesamtbild erzeugt werden kann. Weiterhin wird die Bilderzeugung nicht durch eine Person unmittelbar am Fahrzeug durchgeführt. Für Sicherheitssysteme kann damit der Durchsatz erhöht und die Gefährdung des Personals verringert werden. In der Werkstatt bietet die automatische Erzeugung des Unterbodenbildes den Vorteil, dass schon unmittelbar bei der Fahrzeugannahme eine erste Prüfung des Unterbodens durchgeführt und mit dem Kunden besprochen werden kann.

US 2008 211 914 A1 beschreibt ein Verfahren zur automatischen Erzeugung eines Unterbodenbildes mittels einer Zeilenkamera. Der Einsatz einer Zeilenkamera hat den Nachteil, dass die Fahrtrichtung und die Geschwindigkeit des Fahrzeugs durch zusätzliche Sensoren mit erfasst werden muss, um ein Gesamtbild mit ausreichender Qualität zu erzeugen.

US 2007 273 760 A1 beschreibt ein Verfahren zur automatischen Erzeugung eines Unterbodenbildes mittels mehrerer Flächenkameras. Die Position und Blickrichtung der Kameras relativ zueinander müssen dazu vorab bekannt sein. Diese relative Orientierung wird rechnerisch durch Verwendung der Öffnungswinkel der Kameras, die Blickrichtung der Kameras gegenüber der Vertikalen und den erwarteten Abstand zwischen Kameras und Unterboden ermittelt. Die Einzelbilder werden rektifiziert und zu einem einzigen Unterbodenbild zusammengesetzt.

US 7 102 665 B1 beschreibt ein System und ein Verfahren zur Abbildung von Unterböden von bewegten Fahrzeugen mit einer stationären Strahlungsquelle, die ausgebildet ist, um Strahlung auf den Unterboden eines sich vorbei bewegenden Fahrzeugs zu strahlen. Eine stationäre Videokamera, die neben der Strahlungsquelle angeordnet ist, hat ein nach oben weisendes Sichtfeld, um repräsentative Bildsignale sequentieller Abschnitte des Unterboden zu erzeugen, während sich das Fahrzeug vorbei bewegt.

Eine Steuerstation aktiviert die Kamera und die Strahlungsquelle, um die Bildsignale zu erzeugen und erzeugt aus den einzelnen Bildsignales ein Mosaikbild des Unterbodens, das von einem Bildschirm angezeigt wird.

Ein Problem der Erzeugung eines qualitativ guten Unterbodenbildes durch Verwendung sequentiell erfasster Einzelbilder des darüberfahrenden Fahrzeugs bildet die Beleuchtung. Die Abbildung aller Teilobjekte mit optimalem Kontrast wird wesentlich durch die Beleuchtung bestimmt. Einfluss hat neben der Reflektanz der Oberfläche vor allem die Tiefenausdehnung des Objekts. Es ist bekannt, dass die erforderliche Beleuchtungsstärke mit dem Quadrat der Entfernung zwischen Beleuchtungsquelle und Objekt zunimmt. Die unterschiedliche Entfernung zwischen Kamera und Objekt ist schon allein durch den Öffnungswinkel der Kamera gegeben. Selbst bei einem ebenen Objekt sind die Entfernungen zur Kamera von den Objektteilen, die sich am Bildrand befinden, zwangsläufig weiter von der Kamera entfernt als im Bildzentrum. Zusätzlich kann auch das Objektiv aufgrund seiner Konstruktion einen radialen Helligkeitsverlust (Vignettierung) aufweisen. Auch Mikrolinsen auf der Sensoroberfläche zur Lichtbündelung können eine Vignettierung hervorrufen. Da in der Regel der Unterboden eines Fahrzeugs zusätzlich in der Tiefe gestaffelte Objekte aufweist, ist eine optimale Beleuchtung aller Teilobjekte nur schwer zu erreichen.

Bisher bekannte Lösungen zielen auf eine 2-dimensionale Optimierung einer homogenen Lichtausbreitungsfront durch örtliche Variation der Beleuchtungsstärke und/oder der Beleuchtungsrichtung, um die beschriebenen Effekte des Helligkeitsverlustes zum Bildrand hin auszugleichen.

DE 10 134 975 B4 verwendet dafür mehrere LEDs, von denen jede mit einer Einzellinse ausgestattet ist oder alternativ eine LED-Lichtleiste mit einer Zylinder- oder Fresnellinse, die z.B. als lichtdurchlässiger Halbrundstab ausgebildet ist.

US 2008 211 914 zielt im Kern ebenfalls auf eine optimale Beleuchtung von Einzelbildern quer zur Fahrtrichtung. Dazu wird eine spezielle LED-Anordnung, insbesondere geeignet für eine Zeilenkamera, vorgeschlagen. Die Anzahl der LEDs wird zum Bildrand hin erhöht und die Abstrahlrichtung der LEDs variiert. Ein Modul zur Beleuchtungskontrolle steuert die Beleuchtung der einzelnen LEDs, wobei die Beleuchtungszeit abhängig ist von der Abstrahlrichtung.

### Offenbarung der Erfindung

Eine Aufgabe der vorliegenden Erfindung ist es, die Abbildungsqualität der Bildaufnahme einer Fläche zu verbessern und insbesondere einen Qualitätsverlust der Abbildung, der mit einer unterschiedlichen Beleuchtung einzelner Bildbereiche einhergeht, zu vermeiden.

Diese Aufgabe wird durch ein Bildaufnahmeverfahren nach dem unabhängigen Patentanspruch 1 und eine Vorrichtung zur Bildaufnahme nach dem unabhängigen Patentanspruch 4 gelöst. Die abhängigen Patentansprüche beschreiben vorteilhafte Ausgestaltungen eines erfindungsgemäßen Verfahrens bzw. einer erfindungsgemäßen Vorrichtung.

Dadurch, dass das Gesamtbild erfindungsgemäß aus unterschiedlich belichteten Teilbildern der Fläche, die jeweils einen Bereich der Fläche abbilden, zusammengesetzt wird, wobei jedes Teilbild mit einer für den jeweiligen Bereich optimierten Belichtung und/oder Beleuchtung aufgenommen worden ist, ist es möglich, ein in allen Bereich optimiert belichtetes Gesamtbild der Fläche zur Verfügung zu stellen und insbesondere unter- und/oder überbelichtete Bereiche zu vermeiden. Sowohl Flächen mit stark variierenden Refelexionseigenschaften, z.B. mit weißen und schwarzen Bereichen, als auch konturierte Flächen, die eine stark variierende Tiefenausdehnung haben, können mit optimalem Kontrast dargestellt werden. Auf diese Weise kann beispielsweise der Unterboden eines Kraftfahrzeuges optimiert abgebildet und anhand des erzeugten Bildes optisch überprüft werden.

Der Kontrast ergibt sich aus den minimalen und maximalen Intensitäten im Bild, bzw. aus praktischen Überlegungen aus minimalen und maximalen Grauwerten im Bild. Der Kontrast kann einen Wert zwischen 0 und 1 annehmen. Zur Kontrastoptimierung werden Grauwerte in den Bildern dahingehend verändert, dass die Kontrastzahl möglichst nah an den Wert 1 heranreicht. Bei einem Vergleich mehrerer Bilder oder mehrerer Bereiche eines Bildes, wird das Bild oder der Bereich mit höchster Kontrastzahl als Bild oder Bereich mit optimalem Kontrast bezeichnet. Weitere Informationen zur Bestimmung des Kontrastes innerhalb eines Bildes können den Schriften Peter Haberäcker, Digitale Bildverarbeitung - Grundlagen und Anwendungen, 4. Auflage, Hanser Verlag 1991, ISBN 3-446-16339-5 oder Thomas Luhmann, Nahbereichsphotogrammetrie - Grundlagen, Methoden und Anwendungen, 2. Auflage Wichmann Verlag 2003, ISBN 3-87907-398-8 entnommen werden.

Die Belichtung kann insbesondere durch Variieren der Blende und/oder der Belichtungszeit der Bildaufnahmevorrichtung eingestellt werden.

Alternativ oder zusätzlich kann die Beleuchtung variiert werden, indem die Beleuchtungsintensität und/oder die Beleuchtungsdauer für jedes Bild verändert werden.

Dazu kann die Vorrichtung wenigstens eine Beleuchtungsvorrichtung umfassen, die ausgebildet ist, um wenigstens einen Bereich der Fläche zu beleuchten. Die Beleuchtungsvorrichtung kann dafür eine oder mehrere Beleuchtungselemente und eine Beleuchtungssteuerungsvorrichtung umfassen, die ausgebildet ist, die Beleuchtungsvorrichtung anzusteuern. Das Ansteuern der Beleuchtungsvorrichtung kann adaptiv unter Berücksichtigung der aufgenommenen Bilder erfolgen, um die optimale Beleuchtungsstärke einzustellen.

Durch eine Beleuchtungsvorrichtung kann das Verfahren unabhängig von den Umgebungsbedingungen, d.h. den natürlichen Lichtverhältnissen der Umgebung, und insbesondere auch im 24h-Einsatz bei Dunkelheit, durchgeführt werden.

Es können mehrere Beleuchtungselemente mit verschiedenen Abstrahlrichtungen eingesetzt werden, um Kanten der Teilobjekte hervorzuheben (Segmentierung). Es kann auch eine Kombination entgegen gesetzt blickender Kameras eingesetzt werden, um nicht einsehbare, sichttote Räume zu verringern.

Die Beleuchtungselemente können permanent eingeschaltet sein oder gepulst werden. Gepulste Beleuchtungselemente werden mit der Bildaufnahmevorrichtung synchronisiert, damit die Aussendung des Lichtimpulses zum gleichen Zeitpunkt und in der Regel mit der gleichen Dauer erfolgt wie die Belichtung des Sensors. Die Pulsdauer kann jedoch auch kleiner gewählt werden als die Belichtungsdauer des Sensors, wenn die kleinste, technisch mögliche Bildaufnahmedauer der eingesetzten Bildaufnahmevorrichtung bei Teilobjekten mit hoher Reflektanz immer noch zu einer Überstrahlung im Bild führt. Eine Pulsdauer, die größer als die Belichtungsdauer des Bildaufnahmesensors ist, wird hingegen eingestellt, wenn eine unzureichende Synchronität zwischen Bildaufnahme und Beleuchtung vorliegt.

Besteht die Beleuchtungsvorrichtung aus mehr als einem Beleuchtungselement, können die Beleuchtungselemente in einer Zeile quer zur Fahrtrichtung oder in zwei oder mehr Reihen quer zur Fahrtrichtung angeordnet sein, so dass eine Beleuchtungsmatrix aus n x m Beleuchtungselementen entsteht.

Die Beleuchtungsmatrix kann Beleuchtungselemente mit identischen oder verschiedenen Wellenlängen und mit identischer oder verschiedener maximaler Beleuchtungsintensität enthalten.

Die Verwendung einer Beleuchtungszeile oder einer Beleuchtungsmatrix bietet den Vorteil, dass während der mehrfachen Aufnahme eines Objektpunktes neben der Beleuchtungsdauer und Beleuchtungsintensität auch der Beleuchtungsort und damit die Beleuchtungsrichtung variiert werden kann. So ist allein durch die räumliche Anordnung der Beleuchtungselemente zwangsläufig eine Beleuchtung aus unterschiedlichen Richtungen möglich. Darüber hinaus können einzelne Beleuchtungselemente auch konstruktiv mit abweichenden Abstrahlrichtungen vorgesehen werden.

Eine Beleuchtungsmatrix bietet z.B. die Möglichkeit, die Beleuchtungsrichtung von Bild zu Bild konstant zu halten, wenn das Fahrzeug sich weiterbewegt (mitlaufende Beleuchtung). Durch sequentielles Einschalten von einzelnen Beleuchtungszeilen der Beleuchtungsmatrix kann, bei Prädiktion der Fortbewegung wie unten beschrieben, die adaptive Beleuchtungsoptimierung einfacher vorgenommen werden, weil die Änderung der Beleuchtungsrichtung kompensiert wird.

Eine Beleuchtung aus verschiedenen Richtungen bietet den Vorteil, dass abgeschattete Bereiche verringert werden. Durch eine mehrmalige Aufnahme von Objekten aus unterschiedlichen Beleuchtungsrichtungen, ist aus den Einzelaufnahmen die Erstellung eines Bildes möglich, bei welchem schattierte Bereiche minimiert sind.

Weiterhin sind Verfahren bekannt, die mittels wechselnder Beleuchtungsrichtungen Konturextraktion aus Schatten ermöglichen. Sie sind besser geeignet als intensitätsbasierte Kantendetektionsverfahren wie z.B. der Canny-Operator. Schatten sind besonders stark ausgeprägt in Regionen, in denen eine diskontinuierliche Oberflächenänderung vorliegt, wie z.B. an Kanten. Die Stärke dieser Verfahren liegt in der Beschreibung dieser diskontinuierlichen Oberflächen und ist daher für eine Segmentierung der Teilobjekte gut geeignet. Teilobjekte mit ähnlicher Reflektanz jedoch in unterschiedlichen Tiefen des Objektes können dadurch gut voneinander unterschieden werden. Die geometrische Zuordnung zwischen Bildaufnahmevorrichtung und Beleuchtungsvorrichtung muss dazu nicht bekannt sein.

Eine Beleuchtungsvorrichtung, die mindestens ein Beleuchtungselement, vorzugsweise eine LED, aufweist, kann für das menschliche Auge sichtbares oder nicht sichtbares Licht aussenden. Wird mehr als ein Beleuchtungselement verwendet, können verschiedene, beliebige Wellenlängen des Lichts auch zu verschiedenen Bildaufnahmezeiten eingesetzt werden, so dass ein Objektpunkt mehrfach mit wechselnden Wellenlängen und wechselnden Intensitäten des Lichtes beleuchtet wird. Dadurch wird die Lokalisierung möglicher Problemstellen der Fläche, insbesondere eines Kfz-Unterbodens vereinfacht.

Die Beleuchtungsstufen können auch adaptiv geregelt werden. Entweder erfolgt die adaptive Anpassung durch Analyse der ersten Einzelbilder und wird danach, auf Grundlage der Ergebnisse der Analyse, für die weitere Erfassung fest eingestellt, oder die Analyse und Anpassung erfolgt periodisch und bleibt für einen Bildzyklus von x Bildern konstant oder die Analyse und Anpassung erfolgt kontinuierlich von Bild zu Bild. Die Bildanalyse zur adaptiven Beleuchtungsregelung erfolgt anhand bekannter Verfahren der digitalen Bildverarbeitung. So können z.B. entweder im gesamten Einzelbild oder in mindestens einem Bildausschnitt das Histogramm und/oder der Bildkontrast bezüglich minimaler, maximaler oder mittlerer Werte untersucht werden.

Der Vorteil der adaptiven Regelung liegt in der Flexibilität bezüglich wechselnder Lichtverhältnisse, sowie in der Flexibilität bezüglich wechselnder Entfernungen zwischen Beleuchtungselementen und Teilobjekten sowohl am Unterbodens eines Fahrzeugs als auch von Fahrzeug zu Fahrzeug, sowie in der Flexibilität bezüglich wechselnder Reflektanz der Teilobjekte.

Vorteilhaft für die adaptive Anpassung ist die genäherte Prädiktion der nächsten relativen Position des Fahrzeugs gegenüber der Bildaufnahmevorrichtung und den Beleuchtungselementen. Die Bestimmung von Trajektorien markanter Bildinhalte in Echtzeit gelingt z.B. durch die Berechnung des optischen Flusses. Aus der Historie der Trajektorien der vorhergehenden Bilder können die Positionen relevanter Teilobjekte in den nächsten Bildern prädiziert werden und dadurch können gezielt Beleuchtungselemente zu- oder abgeschaltet werden, wie weiter oben beschrieben.

Weiterhin vorteilhaft für die adaptive Beleuchtungsregelung ist eine 3D-Tiefenmessung von Teilobjekten. Eine 3D-Tiefenmessung ist zum Beispiel durch Stereotriangulation möglich, wenn wenigstens zwei Bildaufnahmevorrichtungen eingesetzt werden, deren Objektausschnitte sich überdecken. Kenntnis über die Entfernung zwischen der Bildaufnahmevorrichtung und dem Objekt und die Tiefenausdehnung des Objekts erleichtern die Anpassung der Parameter zur bestmöglichen Belichtungssteuerung.

Einen weiteren Vorteil bietet eine adaptive Regelung, wobei überwacht wird, ob die Belichtungsdauer und/oder die Beleuchtungsintensität nicht mehr den Anforderungen eines optimalen Kontrastes genügt aber nicht nachgeregelt werden kann, weil die technischen Möglichkeiten der Bildaufnahmevorrichtung und Beleuchtungsvorrichtung ausgeschöpft sind. Der Fahrer kann dann z. B. unmittelbar über eine Anzeigeeinheit aufgefordert werden langsamer zu fahren, wodurch die Anzahl der Beleuchtungsstufen erhöht werden kann. Oder aber die Bildaufnahme wird abgebrochen und der Fahrer wird aufgefordert, die Überfahrt erneut mit einer von Anfang an geringeren Geschwindigkeit durchzuführen.

Die Geschwindigkeit der Bewegung der Fläche in Bezug auf die Bildaufnahmevorrichtung, insbesondere die Fahrgeschwindigkeit eines Fahrzeugs, kann genähert durch die bekannte Aufnahmefrequenz und den als zumindest näherungsweise bekannten Abstand der Bildaufnahmevorrichtung zum Unterboden ermittelt werden. Dazu wird ein Objektmerkmal in mindestens zwei Bildern gesucht und der im Bild zurückgelegte Weg mit der Bildaufnahmefrequenz und dem Abstand zwischen der Bildaufnahmevorrichtung und dem Unterboden in Bezug gesetzt. Vorteilhaft ist die Verwendung mehrerer Objektmerkmale und eine Mittelbildung der so ermittelten Einzelgeschwindigkeiten. Die aus Objektmerkmalen ermittelte Fahrgeschwindigkeit kann ebenfalls herangezogen werden, um ungültige Messungen bei Überschreiten der vorgegebenen Geschwindigkeit zu erkennen.

Das erfindungsgemäße Verfahren ist unabhängig von der Bewegungsrichtung der Fläche bzw. der Fahrtrichtung des Fahrzeugs. Die Fläche kann sich sogar schräg zur Ausrichtung der Messeinheit bewegen und auch rückwärts die Messeinheit überqueren. Darüber hinaus erkennt der Algorithmus zur Generierung des 2D-Gesamtbildes, ob die Fläche bzw. das Fahrzeug angehalten wurde und ggf. sogar etwas in die entgegen gesetzte Richtung bewegt wurde bevor es seine Fahrt fortsetzt. Die Bilddaten werden entsprechend bereinigt. Weiterhin ist das Verfahren unabhängig davon, von welcher Seite die Messeinheit überfahren wird.

Zur Prüfung der Fläche wird das erzeugte 2D-Gesamtbild auf einem Monitor angezeigt. Dem Anwender wird die Möglichkeit gegeben, Bildausschnitte zu vergrößern und einen vergrößerten Bildausschnitt im Gesamtbild zu verschieben. Dadurch ist eine Bewertung durch den Anwender einfach möglich. Als problematisch erkannte Schadstellen können interaktiv im Bild gekennzeichnet werden (z.B. Kreise in verschiedenen Farben). Das Ergebnis kann mit dem Kunden direkt besprochen und ihm als digitale Kopie oder als Ausdruck auf Papier ausgehändigt werden.

Optional erfolgt eine Übertragung und Speicherung der Messdaten und Ergebnisse auf einen Server.

Das Verfahren kann automatisiert an einem rollenden Fahrzeug durchgeführt werden, um dessen Unterboden optisch abzubilden und zu untersuchen. Das Verfahren und die Vorrichtung sind insbesondere geeignet, um in Bereichen mit geringen Fahrgeschwindigkeiten von Kraftfahrzeugen wie z.B. an Einfahrten zu Tankstellen, Werkstätten und Parkplätzen eine Inspektion des Unterbodens eingesetzt zu werden.

In der Bildaufnahmevorrichtung können Objektive mit Vignettierung und/oder Bildsensoren mit Mikrolinsen zum Einsatz kommen.

In einer Ausführungsform ist die Bildoptimierungsvorrichtung ausgebildet, im Schritt b) ein optimiertes Bild für einen Bereich zu erzeugen, indem in den unterschiedlich belichteten und/oder beleuchteten Bildern des jeweiligen Bereiches Merkmale identifiziert werden, die mit optimiertem Kontrast abgebildet sind, und das Bild als optimiertes Bild ausgewählt wird, das die meisten mit optimiertem Kontrast abgebildeten Merkmale enthält. Dies stellt ein einfaches Verfahren zum Erzeugen eines optimierten Gesamtbildes zur Verfügung, das gute Ergebnisse liefert.

In einer alternativen Ausführungsform ist die Bildoptimierungsvorrichtung ausgebildet, im Schritt b) ein optimiertes Bild für einen Bereich zu erzeugen, indem aus jeweils wenigstens zwei Bildern des gleichen Bereiches, die mit unterschiedlicher Beleuchtung/Belichtung aufgenommen worden sind, wenigstens ein synthetisches Zwischenbild erzeugt wird und in den Teilbildern und synthetischen Zwischenbildern Teilobjekte mit optimalem Kontrast identifiziert werden.

Vorzugsweise werden beim Zusammensetzen der Teilobjekte die Ränder der einzelnen Teilobjekte angepasst, um Artefakte an den Schnittstellen zwischen den zusammengesetzten Teilobjekten zu vermeiden.

In einer weiteren Ausführungsform werden beim Zusammensetzen der Bilder im Schritt c) die Ränder der einzelnen Bilder von der Bildsynthesevorrichtung angepasst, um Artefakte an den Schnittstellen zwischen den zusammengesetzten Bildern zu vermeiden und auf diese Weise die Bildqualität zu erhöhen. Dabei können die Ränder der Bilder beispielsweise durch eine lokale Histogrammanpassung, die sich als Verfahren der digitalen Bildverarbeitung bewährt hat, angepasst werden.

In einer alternativen Ausführungsform ist die Bildoptimierungsvorrichtung ausgebildet, um im Schritt b) ein optimiertes Bild für einen Bereich zu erzeugen, indem unter Anwendung varianzbasierter Kontrastanpassung aus jeweils wenigstens zwei Bildern des gleichen Bereiches, die mit unterschiedlicher Beleuchtung/Belichtung aufgenommen worden sind, wenigstens ein synthetisches Zwischenbild erzeugt wird. Mit einem solchen Verfahren, das das Erzeugen synthetischer Zwischenbilder umfasst, können besonders gute Ergebnisse erzielt werden.

### Figurenbeschreibung

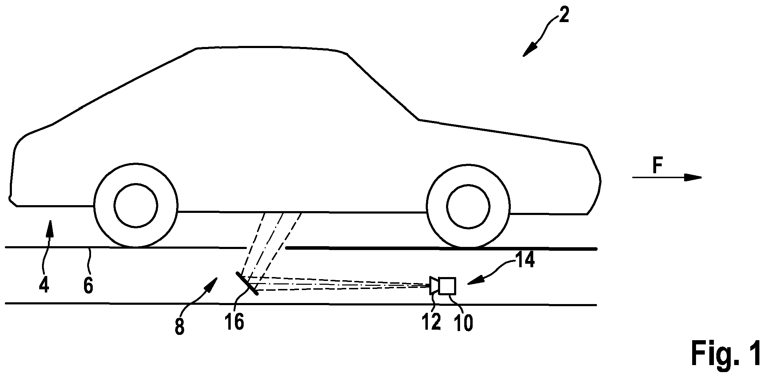

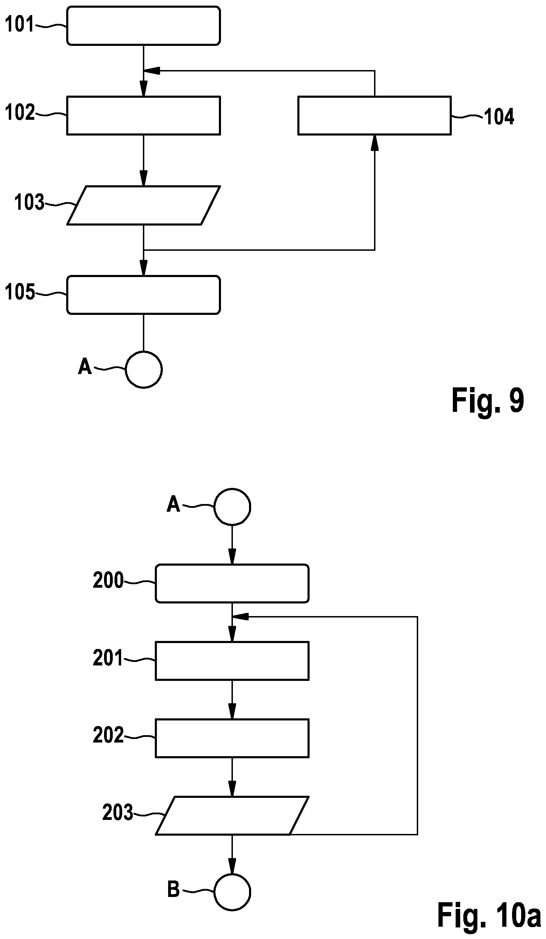

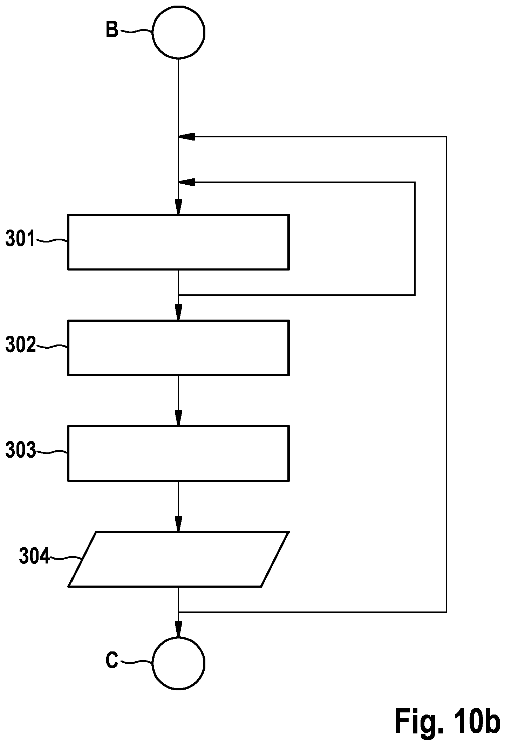

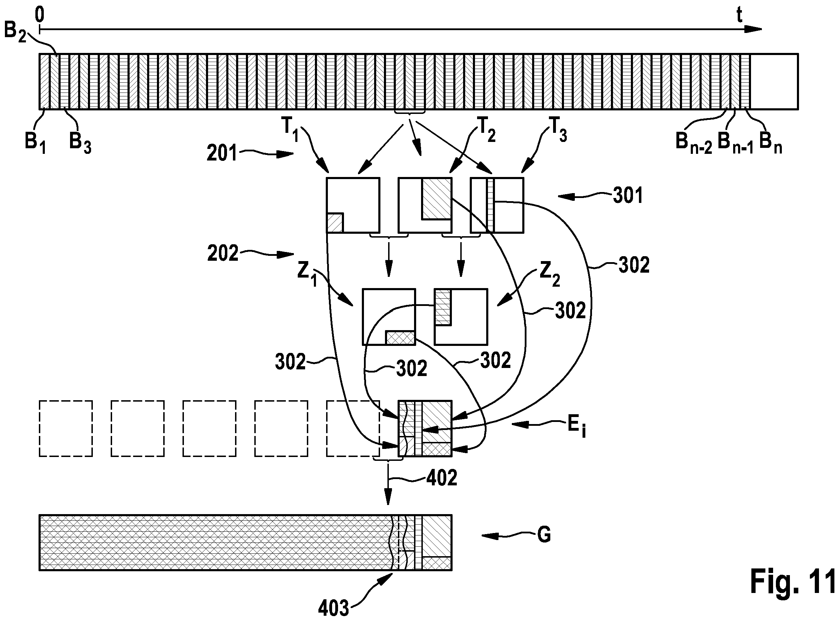

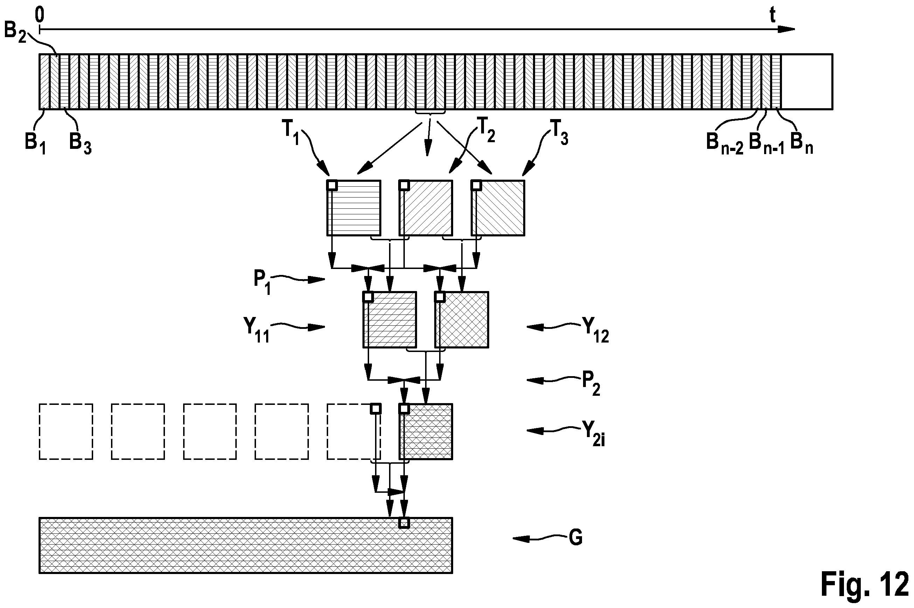

Figur 1 zeigt eine schematische Seitenansicht einer Vorrichtung zur Aufnahme von Bildern des Unterbodens 4 eines Kraftfahrzeugs 2. Eine Bildaufnahmevorrichtung 14 befindet sich in einer Vertiefung 8 unterhalb der Fahrbahn 6 oder innerhalb einer überfahrbaren Schwelle auf der Fahrbahn 6 in einer festen Position. Überquert das Fahrzeug 2 die Bildaufnahmevorrichtung 14 in Fahrtrichtung F (in der Figur 1 von links nach rechts), können von der Bildaufnahmevorrichtung 14 Bilder des Unterbodens 4 aufgenommen werden. Die Bildaufnahmevorrichtung 14 umfasst mindestens eine s/w- oder Farbkamera 10, die beispielsweise mit einem Flächensensor (CCD, CMOS, ...) und einem Objektiv 12 ausgestattet ist. Es können ein oder mehrere Spiegel 16 eingesetzt werden, um den notwendigen Bauraum zu reduzieren.
   Die Auflösung der von der Bildaufnahmevorrichtung 14 aufgenommenen Bilder hängt davon ab, unter welchem Abbildungsmaßstab ein Objektdetail auf dem Flächensensor der Bildaufnahmevorrichtung 14 abgebildet wird. Der Abbildungsmaßstab ist eine Funktion der Brennweite und des Abstandes zwischen der Bildaufnahmevorrichtung 14 und dem Unterboden 4. Die Brennweite und die Abbildungseigenschaften des Objektivs 12 (z.B. die Tiefenschärfe) werden so gewählt, dass der Unterboden 4 von allen Fahrzeugen 2 einer Kategorie (z.B. Personenkraftwagen) mit hinreichender Qualität abgebildet wird. Dazu reicht eine Abschätzung, dass sich der Unterboden 4 bei allen Personenkraftwagen in etwa in einem Abstand von 100 mm bis 500 mm über der Fahrbahn 6 befindet.
   Durch Auslegen der Bildaufnahmevorrichtung 14 auf den ungünstigsten Fall, d.h. auf Fahrzeuge 2 mit dem größtmöglichen Abstand des Unterbodens 4 von der Fahrbahn 6, wird eine Auflösung der Bilder gewährleistet, die ausreichend ist, um den Unterboden 4 auf mögliche Schadstellen untersuchen zu können. Für andere Fahrzeugkategorien (wie z.B. Nutzfahrzeug, LKW, Busse) können ggf. Bildaufnahmevorrichtungen 14 mit entsprechend angepassten optischen Eigenschaften verwendet werden.
   Die Qualität der Bilder ist auch abhängig von der Fahrgeschwindigkeit des Fahrzeugs 2 und der Belichtungszeit. Unter der Prämisse, dass sich das Fahrzeug 2 mit geringer Geschwindigkeit, d.h. zum Beispiel mit weniger als 15 km/h über die Bildaufnahmevorrichtung 14 bewegt, wird die Belichtungszeit so gewählt, dass die Bewegungsunschärfe in den Bildern durch das sich bewegende Fahrzeug 2 zu vernachlässigen ist. Ist die Fahrgeschwindigkeit zu hoch, führt eine daraus resultierende Bewegungsunschärfe im Bild zu einer Verschlechterung des Kontrastes und kann genutzt werden, um durch Überschreiten der vorgegebenen Geschwindigkeit ungültige Messungen zu erkennen.
   Die Belichtungszeit hängt entscheidend vom verfügbaren Licht ab. Mindestens eine (in der Figur 1 nicht gezeigten) Beleuchtungsvorrichtung mit einer oder mehreren Beleuchtungselementen, die auf die Eigenschaften, insbesondere den Spektralbereich des Bildaufnahmesensors abgestimmt sind, kann eingesetzt werden, um das natürlich vorhandene Umgebungslicht zu ergänzen. Dies ist vor allem bei einem System mit 24-Stunden Einsatz erforderlich, die auch in der Dunkelheit eingesetzt werden sollen.

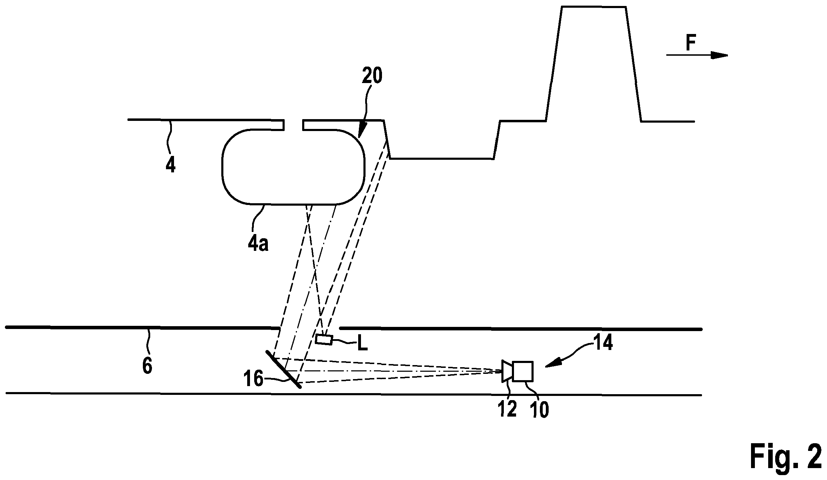

Figur 2 zeigt beispielhaft die Anordnung einer Beleuchtungsvorrichtung L und die Aufnahme eines Bildes eines über die Messvorrichtung fahrenden Fahrzeugs 2 mit einem in der Tiefe gestaffeltem Unterboden 4. Es ist leicht ersichtlich, dass durch Bauteile 4a, die vom Unterboden 4 hervorstehen, Verdeckungen und/oder Abschattungen 20 des aufgenommenen Bildes auftreten können, so dass der Unterboden 4 nicht vollständig von der Kamera 10 der Bildaufnahmevorrichtung 14 aufgenommen werden kann.

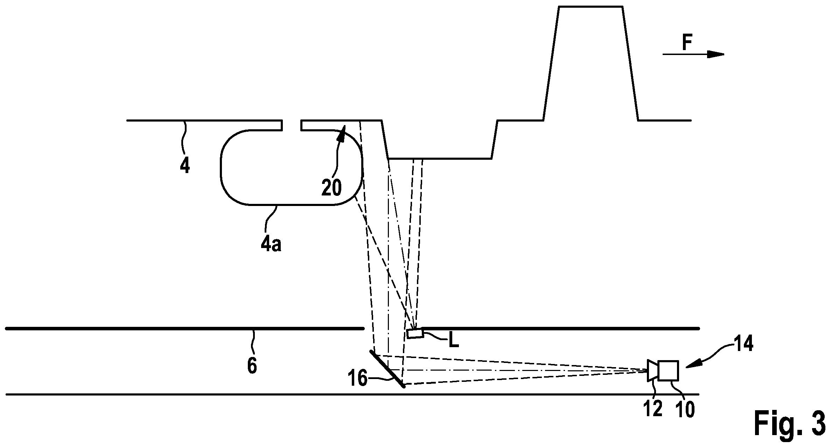

Figur 3 zeigt eine alternative Anordnung, in der die Aufnahmerichtung im Wesentlichen senkrecht zur Fahrbahnebene 6 ausgerichtet ist, um mögliche Verdeckungen 20 von Bereichen des Unterbodens 4 zu reduzieren. Es ist vorteilhaft, unter Beibehaltung des beschriebenen Messprinzips mehr als eine Bildaufnahmevorrichtung 14 und/oder mehr als eine Beleuchtungsvorrichtung L zu verwenden.

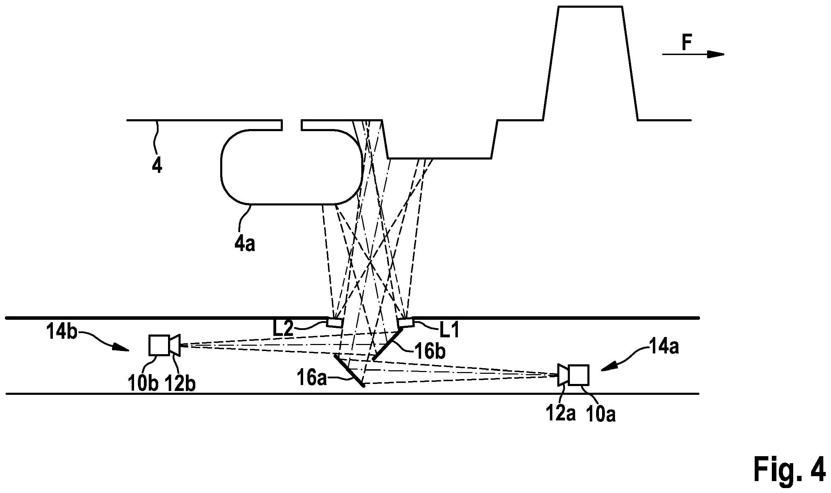

Figur 4 zeigt beispielhaft ein Ausführungsbeispiel, das eine Kombination von zwei entgegengesetzt ausgerichteten Bildaufnahmevorrichtungen 14a, 14b mit zwei Beleuchtungselementen L1, L2 aufweist, wodurch die sichttoten Räume parallel zur Fahrtrichtung F weiter minimiert werden. Die Qualität der Darstellung des Unterbodens 4 in den aufgenommenen Bildern kann gesteigert werden, indem die Sicht behindernde Bereiche, die durch gegenseitige Verdeckungen von Bauteilen 4a entstehen, verringert werden, und/oder indem die Beleuchtungsrichtung optimiert wird, um Objektdetails des Unterbodens 4 besser auszuleuchten. Analog können auch mehrere Bildaufnahmevorrichtungen 14a, 14b und Beleuchtungselemente L1, L2, die quer zur Fahrtrichtung F angeordnet sind, dazu beitragen, sichttote Bereiche quer zur Fahrtrichtung F zu reduzieren.

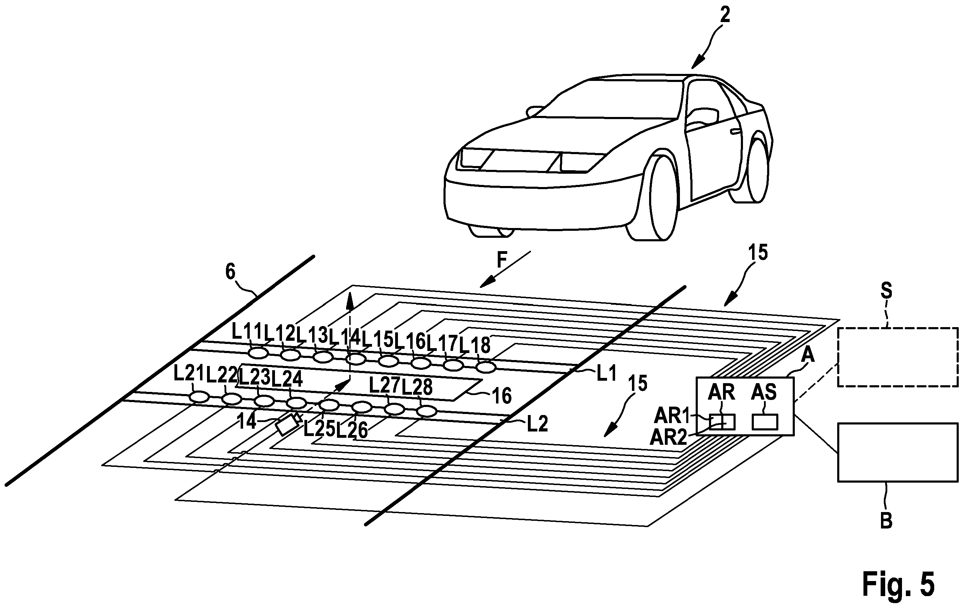

Figur 5 zeigt schematisch ein Ausführungsbeispiel einer Vorrichtung zur Beobachtung des Unterbodens 4 eines Kraftfahrzeugs 2 mit einer Bildaufnahmevorrichtung 14, einem Spiegel 16 und einer Beleuchtungsvorrichtung L, die zwei Beleuchtungszeilen L1, L2 mit je 8 Leuchtelementen L11 - L18 und L21 - L28, die in oder auf einer Fahrbahn 6 quer zur Fahrtrichtung F des Kraftfahrzeuges 2 angeordnet sind, umfasst. Die Bildaufnahmevorrichtung 14 und die Beleuchtungszeilen L1, L2 sind über elektrische Kabel 15 mit einer Mess- und Auswerteeinheit A verbunden. Die Mess- und Auswerteeinheit A ist darüber hinaus mit einer Anzeigeeinheit B und optional mit einem Server S verbunden.
   Die Mess- und Auswerteeinheit A ist zur Steuerung der Bildaufnahmevorrichtung 14, der Beleuchtungszeilen L1, L2 sowie zur Speicherung der während jeder Überfahrt aufgenommenen Bilder ausgebildet.
   Die Mess- und Auswerteeinheit A umfasst eine Speichereinheit AS und eine Rechnereinheit AR, die insbesondere eine Bildoptimierungsvorrichtung AR1 und eine Bildsynthesevorrichung AR2 umfasst und mit einer Auswertesoftware ausgestattet ist, um die Beleuchtungssteuerung, die Analyse und Nachbearbeitung der Bilddaten, die Prüfung auf Überschreitung der optimalen Fahrgeschwindigkeit, sowie schließlich die Bereitstellung eines optimierten Gesamtbildes G durchzuführen. Die Mess- und Auswerteeinheit A steuert auch die Anzeigeeinheit B, die zur Anzeige der Unterboden-Bildinformation vorgesehen ist, an und überträgt optional Informationen an einen übergeordneten Server S.
   Die Mess- und Auswerteeinheit A kann auch als Bestandteil der Bildaufnahmevorrichtung 14 ausgeführt sein ("Intelligente Kamera").
   Das Prüfsystem kann zweckmäßigerweise in eine Überfahrrinne integriert werden, wie sie aus dem Straßenbau bekannt und bewährt ist.

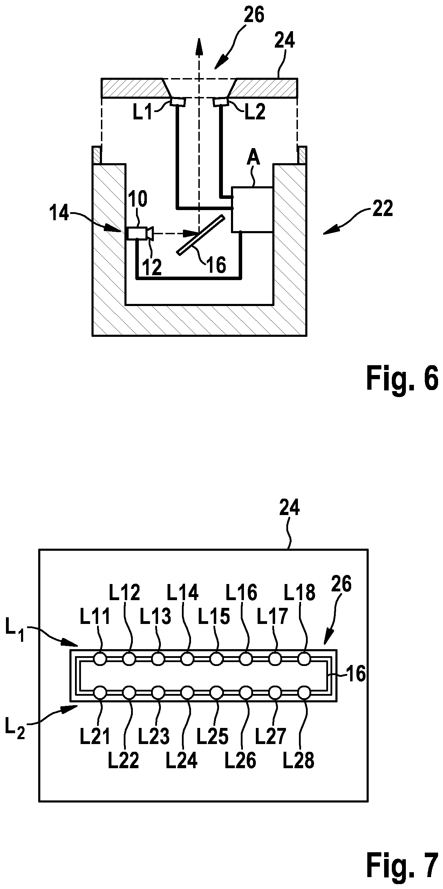

Figur 6 zeigt ein Ausführungsbeispiel einer solchen Überfahrrinne 22 im Querschnitt. Die Mess- und Auswerteeinheit A ist dabei seitlich an einer Wand der Überfahrrinne 22 angeordnet, um sie vor in die Überfahrrinne eindringendem Wasser, das sich ggf. am Boden der Überfahrrinne 22 sammelt, zu schützen.
   Die Überfahrrinne 22 wird durch einen Deckel 24 verschlossen. Der Deckel 24 weist einen Schlitz 26 auf, der eine Sichtverbindung zwischen der Bildaufnahmevorrichtung 14 und dem Unterboden 4 eines in der Figur 6 nicht gezeigten Kraftfahrzeugs 2, das über die Überfahrrinne 22 fährt, ermöglicht. Unterhalb oder innerhalb des Deckels 24 sind Beleuchtungsvorrichtungen L1, L2 angeordnet.
Figur 7 zeigt den Deckel 24 in einer schematischen Draufsicht. Durch den Schlitz 26 sind der Spiegel 16 und Beleuchtungszeilen L1, L2 mit den Leuchtelementen L11 - L18 und L21 - L28 erkennbar.

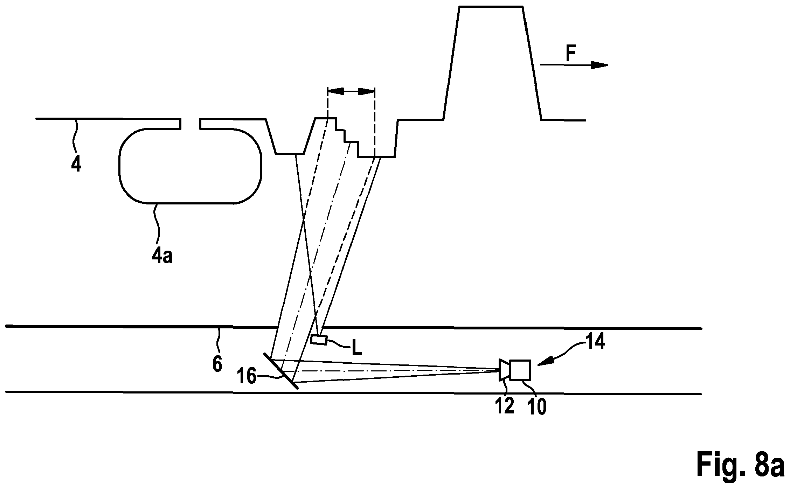

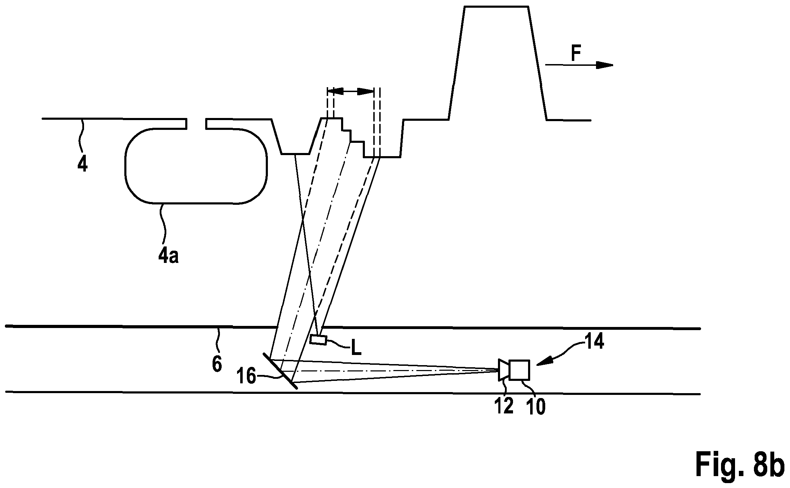

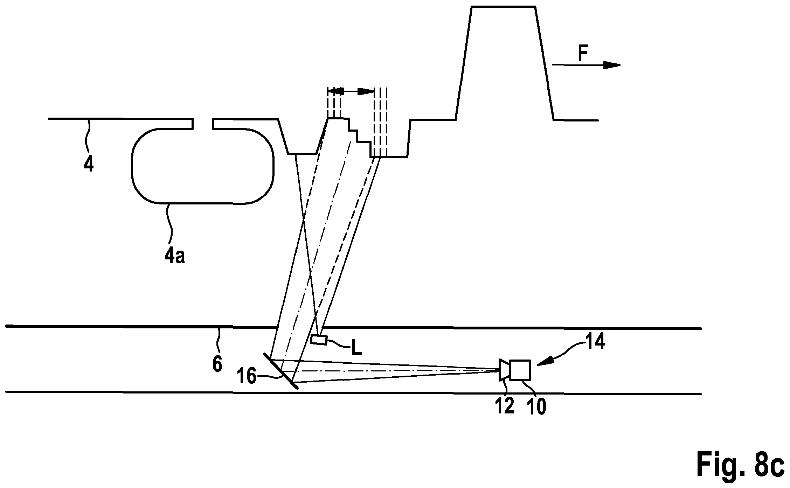

Die Figuren 8a bis 8c zeigen die Aufnahme einer Bildsequenz mit beispielsweise drei Belichtungsstufen, die durch Änderung der Beleuchtungsintensität realisiert werden, während sich das Fahrzeug 2 über die Bildaufnahmevorrichtung 14 bewegt. In Figur 8a erfasst die Bildaufnahmevorrichtung 14 den Unterboden mit einer geringen ersten Beleuchtungsintensität Bl (Bild m, Belichtungsintensität Bl-1), in Figur 8b und Figur 8c entsprechend die Bilder m+1 und m+2 mit veränderten, insbesondere größeren Beleuchtungsintensitäten, z.B. Bl-4 und Bl-9. Für das folgende Bild m+3 wird wieder die erste, geringe Beleuchtungsintensität Bl-1 eingestellt, dann für das Bild m+4 wieder die zweite Beleuchtungsintensität Bl-4, für das Bild m+5 wieder die dritte Beleuchtungsintensität Bl-9 usw. Es ist auch eine andere Abfolge der Beleuchtungsintensitäten denkbar, z.B. Bl-1, Bl-4, Bl-9, Bl-4, Bl-1, Bl-4, Bl-9, usw. Objektpunkte auf dem Unterboden 4 des Fahrzeugs 2 werden aufgrund der veränderten Beleuchtungsintensität in jedem Einzelbild mit einem anderen Kontrast abgebildet. Je nach Distanz und Oberflächenbeschaffenheit werden die Objektpunkte unterbelichtet, optimal belichtet oder überbelichtet abgebildet.
   Ein Ablaufdiagramm des Bildaufnahmeprozesses ist in Figur 9 dargestellt.
   Nach dem Start des Bildaufnahmeprozesses im Schritt 101 wird zunächst ein Bild mit der ersten Beleuchtungsstufe Bl-i aufgenommen (Schritt 102) und im Schritt 103 gespeichert; daraufhin wird im Schritt 104 die Beleuchtungsstufe Bl-i variiert und die Schritte 102, 103 der Bildaufnahme und -speicherung werden wiederholt, bis die gewünschte Anzahl unterschiedlich belichteter Bilder aufgenommen worden ist, d.h. bis das Fahrzeug die Messvorrichtung komplett überquert hat und der Bildaufnahmeprozess im Schritt 105 beendet wird.
   Im Anschluss an den Bildaufnahmeprozess und die damit verbundene Erfassung der Bilddaten beginnt die Datenauswertung. Der Ablauf der Datenauswertung ist unter Bezugnahme auf die Figur 11 in den Figuren 10a bis 10c schematisch dargestellt.
   Vor der im Folgenden beschriebenen Datenauswertung können auch weitere, bekannte Verfahren der digitalen Bildbearbeitung zum Einsatz kommen, um vor der Datenauswertung zusätzliche Verbesserungen der Bilder und insbesondere des Kontrastes der Bilder zu erreichen.
Aus den während des im Zusammenhang mit der Figur 9 beschriebenen Bildaufnahmeprozesses 101-105 aufgenommenen Bildern B₁, ..., Bₙ, werden nach dem Start des Auswerteprozesses (Schritt 200) im Schritt 201 jeweils Paare von zwei Teilbildern T₁, T₂; T₂, T₃ ausgewählt, die mit einander benachbarten Beleuchtungsstufen aufgenommen worden sind. Aus den beiden Teilbildern T₁, T₂; T₂, T₃ eines Bildpaares wird im Schritt 202 jeweils ein synthetisches Zwischenbild Z₁, Z₂ mit einer Quasi-Beleuchtungsintensität QBI erzeugt und gespeichert (Schritt 203).
   In den Teilbildern T₁, T₂, T₃ und den aus den Teilbildern T₁, T₂, T₃ erzeugten Zwischenbildern Z₁, Z₂ wird im Schritt 301 für alle Beleuchtungsstufen Bl-i nach Objektpunkten oder Teilobjekten gesucht, die mit optimalem Kontrast abgebildet wurden. Diese Objektpunkten oder Teilobjekte können einen rechteckigen Bildausschnitt oder auch einem Bildausschnitt mit einer unregelmäßigen Umrandung entsprechen.
   Die so detektierten Objektpunkte oder Teilobjekte, die mit optimalem Kontrast abgebildet sind, werden im Schritt 302 zu einem neuen Bild Eᵢ zusammengefügt (Stitching), das im Schritt 304 als optimiertes Einzelbild Eᵢ abgespeichert wird.
   Zuvor werden im Schritt 303 die Ränder der Teilobjekte z.B. durch eine lokale Histogrammanpassung angepasst, um Streifen und/oder Artefakte beim Aneinandersetzen der Teilobjekte, welche die Betrachtung stören würden, zu vermeiden. Diese Verfahren sind ebenso wie das sogenannte "Stitching" aus den Methoden der digitalen Bildverarbeitung bekannt.
   Die beschriebenen Schritte 301 bis 304 werden n/k mal wiederholt. Dabei ist n die Anzahl der aufgenommenen Bilder B₁, B₂, B₃,... Bₙ und k die Anzahl der bei der Bildaufnahme verwendeten Beleuchtungs- bzw. Belichtungsstufen. Als Zwischenergebnis werden n/k optimierte Einzelbilder E₁, ... E_{n/k} erzeugt und gespeichert.
Dabei ist die in der Figur 11 gezeigte Zusammensetzung des optimierten Einzelbildes Eᵢ aus fünf rechteckigen Teilobjekten aus fünf verfügbaren Teil- und Zwischenbildern T₁, T₂, T₃, Z₁, Z₂ nur beispielhaft dargestellt; wie zuvor beschrieben, kann das optimierte Einzelbild Eᵢ aus einer beliebigen Anzahl beliebig geformter Teilbereiche der Teil- und Zwischenbilder T₁, T₂, T₃, Z₁, Z₂ zusammengesetzt werden, solange die Teilbereiche gemeinsam den gesamten Bereich des optimierten Einzelbildes Eᵢ abdecken.

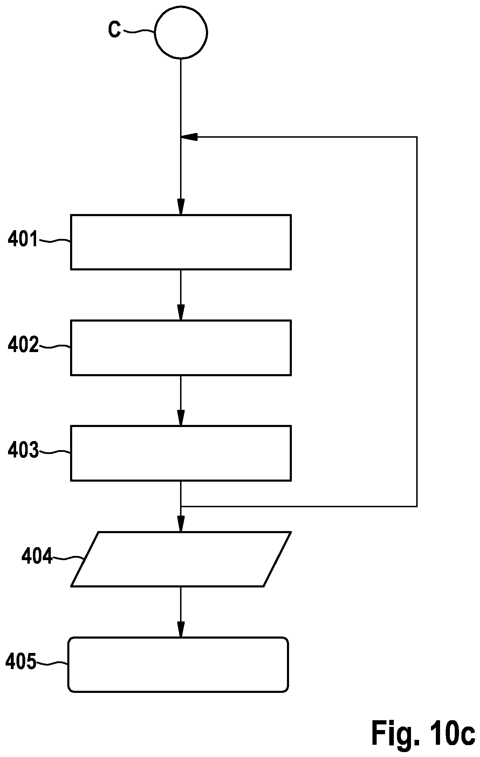

Figur 10c beschreibt schematisch, wie aus den optimierten Einzelbildern Eᵢ ein optimiertes Gesamtbild G des KfZ-Unterbodens 4 erzeugt wird, indem im Schritt 401 zunächst die Überdeckung von jeweils zwei benachbarten, zuvor erzeugten, optimierten Einzelbildern Eᵢ identifiziert wird, im Schritt 402 die optimierten Einzelbilder E₁, ... E_{n/k} zu einem Gesamtbild G zusammengefügt werden ("Stitching"), wobei sich überdeckende Bildbereiche im Schritt 403 ebenfalls einer Randanpassung unterzogen werden, und das optimierte Gesamtbild G im Schritt 404 gespeichert wird, bevor der Auswertungsprozess im Schritt 405 beendet wird.
   In der Praxis hängen die Qualität der optimierten Einzelbilder E₁, ... E_{n/k} und des optimierten Gesamtbildes G stark von der Anzahl und der Form der Teilobjekte 4a sowie von der Beschaffenheit und Tiefenstaffelung des Unterbodens 4 ab.
   In einem alternativen Ausführungsbeispiel eines erfindungsgemäßen Verfahrens, das in der Figur 12 schematisch dargestellt ist, wird auf die Suche und das Ausschneiden von Teilobjekten mit optimalem Kontrast verzichtet. Das alternative Verfahren beruht stattdessen auf dem Generieren synthetischer Zwischenbilder Y₁₁, Y₁₂, Y₂ᵢ mit Hilfe einer varianzbasierten Kontrastanpassung.
   Dabei werden zum Erzeugen eines Zwischenbildes Y₁₁, Y₁₂, zwei Teilbilder T₁, T₂; T₂,T₃, die den gleichen Objektausschnitt zeigen und die mit verschiedenen Beleuchtungsstufen aufgenommen worden sind, miteinander verglichen. Der Vergleich findet innerhalb eines Bildausschnitts von z.B. 20 x 20 Pixel statt, der parallel über die beiden Bilder verschoben wird.
   Die Varianz innerhalb des Bildausschnitts hat sich als gut geeignetes Kriterium herausgestellt. Eine erste Möglichkeit ist es, den Bildausschnitt mit der höheren Varianz für das Zwischenbild zu verwenden. Noch bessere Ergebnisse liefert die Verwendung der Varianzunterschiede der beiden Bildausschnitte. Auch eine vom Varianzunterschied abhängige, gewichtete Multiplikation der beiden Bildausschnitte mit anschließender Addition, hat sich bewährt, um ein gutes Zwischenbild zu erzeugen.
Figur 12 zeigt die Datenauswertung gemäß dem alternativen Ausführungsbeispiel anhand des dargestellten Beispiels einer Bildaufnahme mit drei Beleuchtungsstufen und verdeutlicht insbesondere die pyramidenartige Vorgehensweise zum Generieren synthetischer Zwischenbilder Y₁₁, Y₁₂, Y₂ᵢ aus jeweils zwei Bildern benachbarter Beleuchtungsstufen T₁, T_{2;}T₂, T₃ in der ersten Pyramidenstufe P₁ bzw. zwei benachbarten synthetischen Zwischenbildern Y₁₁, Y₁₂ in der nachfolgenden Pyramidenstufe P₂. In der letzten Pyramidenstufe P₂ wird ein optimiertes Einzelbild Y₂ᵢ erzeugt, in dem jeder Bildpunkt Informationen aus allen Eingangsbildern T₁, T₂, T₃ enthält. In der Figur 12 sind aus Gründen der Übersichtlichkeit nur zwei Pyramidenstufen P₁, P₂ gezeigt. Es ist für den Fachmann jedoch leicht erkennbar, dass und wie das Verfahren unproblematisch auf eine beliebige Anzahl von aufeinander folgenden Pyramidenstufen erweiterbar ist.

Die varianzbasierte Kontrastanpassung kann ebenfalls im letzten Schritt bei der Generierung des optimierten Gesamtbildes G zur Anpassung sich überdeckender Bildbereiche der optimierten Einzelbilder Y₂ᵢ angewendet werden.

Auch andere Kombinationen zur Generierung von Zwischenbildern Yᵢⱼ sind möglich. So können z.B. synthetische Zwischenbilder Yᵢⱼ aus allen Kombinationen der Eingangsbilder Tᵢ, die den gleichen Objektausschnitt aufweisen und mit verschiedenen Beleuchtungsstufen aufgenommen wurden, erzeugt werden und diese können wiederum Stufe für Stufe so lange reduziert werden, bis nach k Stufen ein optimiertes Einzelbild Yₖᵢ erreicht wird. Das Verfahren kann auch dahingehend erweitert werden, dass aus mehr als zwei Bildern mit individueller Gewichtung ein synthetisches Zwischenbild Y₁₁, Y₁₂, Y₂ᵢ erzeugt wird.

## Patentansprüche

1. Verfahren des Bereitstellens eines kontrastoptimierten Bildes einer konturierten Fläche (4) eines Unterbodens (4) eines Kraftfahrzeugs (2), mit wenigstens einer Bildaufnahmevorrichtung (14) und wenigstens einer Beleuchtungsvorrichtung (L), die eine Beleuchtungsmatrix mit mehreren in Beleuchtungszeilen (L1, L2) angeordneten Beleuchtungselementen (L11-L18, L21-L28) aufweist, wobei das Verfahren die Schritte umfasst:
a) Bewegen des Kraftfahrzeugs (2) gegenüber der Bildaufnahmevorrichtung (14) und der Beleuchtungsvorrichtung (L);
b) Beleuchten der Fläche mit der Beleuchtungsvorrichtung (L) derart, dass die Fläche (4) gemäß der Kraftfahrzeugbewegung durch sequentielles Einschalten einzelner Beleuchtungszeilen (L1, L2) der Beleuchtungsmatrix aus unterschiedlichen Beleuchtungsrichtungen beleuchtet wird;
c) Aufnehmen von mehreren einander überlappenden Bildern (Bᵢ) der Fläche (4) mit unterschiedlicher Belichtung und/oder Beleuchtung, während das Kraftfahrzeug (2) über die Bildaufnahmevorrichtung (14) bewegt wird;
d) automatisches Erzeugen von Teilbildern (Tᵢ) der überlappenden Bereiche aus den aufgenommenen Bilder (Bᵢ), wobei wenigstens zwei Teilbilder (Tᵢ), die den gleichen Bereich der Fläche (4) enthalten, aus aufgenommenen Bildern (Bᵢ) erzeugt werden, die mit unterschiedlicher Belichtung und/oder Beleuchtung aufgenommen worden sind;
e) automatisches Erzeugen eines kontrastoptimierten Bildes (Eᵢ) für jeden der Bereiche aus den Teilbildern (Tᵢ) des jeweiligen Bereichs; und
f) automatisches Zusammensetzen der erzeugten kontrastoptimierten Bilder (Eᵢ) zu einem kontrastoptimierten Gesamtbild (G) der Fläche (4),
wobei im Schritt d) ein kontrastoptimiertes Bild (Ei) für einen Bereich erzeugt wird,
indem entweder aus jeweils wenigstens zwei Teilbildern (Tᵢ) des gleichen Bereiches, die mit unterschiedlicher Beleuchtung/Belichtung aufgenommen worden sind, automatisch wenigstens ein synthetisches Zwischenbild (Z1) erzeugt wird und in den Teilbildern (Tᵢ) und in den synthetischen Zwischenbildern (Zᵢ) Teilobjekte mit optimalem Kontrast automatisch identifiziert und in das kontrastoptimierte Bild (Eᵢ) übernommen werden, oder
indem unter Anwendung varianzbasierter Kontrastanpassung aus jeweils wenigstens zwei Teilbildern (T₁, T₂) des gleichen Bereiches, die mit unterschiedlicher Beleuchtung/Belichtung aufgenommen worden sind, automatisch wenigstens ein synthetisches Zwischenbild (Y₁₁, Y₁₂, Y₂ᵢ) erzeugt wird und aus einander benachbarten synthetischen Zwischenbildern (Y₁₁, Y₁₂, Y₂ᵢ) unter Anwendung varianzbasierter Kontrastanpassung automatisch das kontrastoptimierte Bild (Eᵢ) erzeugt wird.

2. Verfahren nach Anspruch 1, wobei beim Zusammensetzen der Teilobjekte im Schritt d) die Ränder der einzelnen Teilobjekte angepasst werden, um Artefakte an den Schnittstellen zwischen den zusammengesetzten Teilobjekten zu vermeiden.

3. Verfahren nach einem der vorangehenden Ansprüche , wobei beim automatischen Zusammensetzen der Bilder (Eᵢ) im Schritt e) die Ränder der einzelnen Bilder (Eᵢ), insbesondere durch eine lokale Histogrammanpassung, angepasst werden, um Artefakte an den Schnittstellen zwischen den zusammengesetzten Bildern (Eᵢ) zu vermeiden.

4. Vorrichtung zum Bereitstellen eines kontrastoptimierten Bildes (G) einer Fläche (4), einschließlich einer konturierten Fläche (4) eines Unterbodens (4) eines Kraftfahrzeugs (2), mit
A) wenigstens einer Bildaufnahmevorrichtung (14), die ausgebildet ist, um mehrere einander überlappende Bilder (Bᵢ) der Fläche (4) mit unterschiedlicher Belichtung und/oder Beleuchtung aufzunehmen, während das Kraftfahrzeug (2) über die Bildaufnahmevorrichtung (14) bewegt wird;
B) wenigstens einer Beleuchtungsvorrichtung (L), die eine Beleuchtungsmatrix mit mehreren in Beleuchtungszeilen (L1, L2) angeordneten Beleuchtungselementen (L1, L2) aufweist, wobei die Beleuchtungsvorrichtung (L) dazu ausgebildet ist, gemäß der Kraftfahrzeugbewegung durch sequentielles Einschalten einzelner Beleuchtungszeilen (L1, L2) der Beleuchtungsmatrix die Fläche (4) derart zu beleuchten, dass die Fläche (4) aus unterschiedlichen Beleuchtungsrichtungen beleuchtet wird;
C) einer Bildoptimierungsvorrichtung (AR1), die ausgebildet ist,
aus den aufgenommenen Bilder (Bᵢ) automatisch Teilbilder (Tᵢ) der überlappenden Bereiche zu erzeugen, wobei wenigstens zwei Teilbilder (Tᵢ), die den gleichen Bereich des Unterbodens (4) enthalten, aus aufgenommenen Bildern (Bᵢ) erzeugt werden, die mit unterschiedlicher Belichtung und/oder Beleuchtung aufgenommen worden sind; und
für jeden der Bereiche aus den Teilbildern (Tᵢ) des jeweiligen Bereichs jeweils ein kontrastoptimiertes Bild (Eᵢ) zu erzeugen; und
D) einer Bildsynthesevorrichtung (AR2), die ausgebildet ist, um die für die einzelnen Bereiche der Fläche (4) von der Bildoptimierungsvorrichtung (AR1) erzeugten kontrastoptimierten Bilder (Eᵢ) zu einem kontrastoptimierten Gesamtbild (G) der Fläche (4) zusammenzusetzen;
dabei ist die Bildoptimierungsvorrichtung (AR1) ausgebildet, ein kontrastoptimiertes Bild (Ei) für einen Bereich zu erzeugen,
indem entweder aus jeweils wenigstens zwei Teilbildern (Tᵢ) des gleichen Bereiches, die mit unterschiedlicher Beleuchtung/Belichtung aufgenommen worden sind, automatisch wenigstens ein synthetisches Zwischenbild (Z1) erzeugt wird und in den Teilbildern (Tᵢ) und in den synthetischen Zwischenbildern (Zᵢ) Teilobjekte mit optimalem Kontrast automatisch identifiziert und in das kontrastoptimierte Bild (Eᵢ) übernommen werden, oder
indem unter Anwendung varianzbasierter Kontrastanpassung aus jeweils wenigstens zwei Teilbildern (Tᵢ) des gleichen Bereiches, die mit unterschiedlicher Beleuchtung/Belichtung aufgenommen worden sind, automatisch wenigstens ein synthetisches Zwischenbild (Y₁₁, Y₁₂, Y₂ᵢ) erzeugt wird und aus einander benachbarten synthetischen Zwischenbildern (Y₁₁, Y₁₂, Y₂ᵢ) unter Anwendung varianzbasierter Kontrastanpassung automatisch das kontrastoptimierte Bild (Eᵢ) erzeugt wird.

5. Vorrichtung nach Anspruch 4, wobei die Bildoptimierungsvorrichtung (AR1) ausgebildet ist, beim Erzeugen des kontrastoptimierten Bildes (Ei) aus den Teilbildern (Ti) die Ränder der einzelnen Teilbilder (Ti) anzupassen, um Artefakte an den Schnittstellen zwischen den Teilbildern (Ti) zu vermeiden.

6. Vorrichtung nach Anspruch 4 oder 5, wobei die Bildsynthesevorrichtung (AR2) eine Bildrandanpassungsvorrichtung umfasst, die ausgebildet ist, um beim Zusammensetzen der Bilder (Eᵢ) die Ränder der einzelnen Bilder (Eᵢ), insbesondere durch eine lokale Histogrammanpassung, so anzupassen, dass Artefakte an den Schnittstellen zwischen zusammengesetzten Bildern (Eᵢ) vermieden werden.

7. Vorrichtung nach einem der Ansprüche 4 bis 6, wobei Vorrichtung wenigstens eine Beleuchtungsvorrichtung (L1, L2) umfasst, die ausgebildet ist, um wenigstens einen Bereich der Fläche zu beleuchten, wobei die Beleuchtungsvorrichtung insbesondere ein oder mehrere Beleuchtungselemente (L11-L18, L21-L28) und eine Beleuchtungssteuerungsvorrichtung (AS) umfasst, die ausgebildet ist, das wenigstens eine Beleuchtungselement (L11-L18, L21-L28) anzusteuern, wobei die Beleuchtungssteuerungsvorrichtung (AS) insbesondere ausgebildet ist, das wenigstens eine Beleuchtungselement (L11-L18, L21-L28) adaptiv unter Berücksichtigung der aufgenommenen Bilder anzusteuern, um eine optimale Beleuchtungsstärke einzustellen.

## Claims

1. A method of providing a contrast-enhanced image of a contoured surface (4) of an undercarriage (4) of a motor vehicle (2) with at least one image capturing device (14) and at least one illumination device (L) including an illumination matrix having a plurality of illumination elements (L11-L18, L21-L28) arranged in illumination rows (L1, L2), the method comprising the steps of:
a) moving the motor vehicle (2) with respect to the image capturing device (14) and the illumination device (L);
b) illuminating the surface with the illumination device (L) such that the surface (4) is illuminated from different illumination directions in accordance with the motor vehicle movement, by sequentially activating individual illumination rows (L1, L2) of the illumination matrix;
c) recording multiple overlapping images (Bᵢ) of the surface (4) using different light exposure and/or illumination while the motor vehicle (2) is moved over the image capturing device (14);
d) automatically generating partial images (Tᵢ) of the overlapping areas of the recorded images (Bᵢ), wherein at least two partial images (Tᵢ) comprising the same region of the surface (4) are generated from recorded images (Bᵢ) which have been recorded with different light exposure and/or illumination;
e) automatically generating, for each region, a contrast-enhanced image (Eᵢ) from the partial images (Tᵢ) of the respective region; and
f) automatically assembling the generated contrast-enhanced images (Eᵢ) to form a contrast-enhanced total image (G) of the surface (4),
wherein, in step (d) a contrast-enhanced image (Eᵢ) for a region is generated
by either automatically generating from at least two partial images (Tᵢ) each of the same region, which have been recorded with different light exposure and/or illumination, at least one synthetic intermediate image (Z1), automatically identifying partial objects having optimum contrast in the partial images (Tᵢ) and in the synthetic intermediate images (Zᵢ), and taking the same over into the contrast-enhanced image (Eᵢ), or
by automatically generating at least one synthetic intermediate image (Y₁₁, Y₁₂, Y₂ᵢ) from at least two partial images (T₁, T₂) each of the same region, which have been recorded with different light exposure/ illumination, employing variance-based contrast adaptation, and automatically generating the contrast enhanced image (Eᵢ) from adjacent synthetic intermediate images (Y₁₁, Y₁₂, Y₂ᵢ) by employing variance-based contrast adaptation.

2. The method according to claim 1,
wherein the margins of the individual partial objects are adapted upon assembling of the partial objects in step d) in order to avoid artifacts at the interfaces between the assembled partial objects.

3. The method according to any of the preceding claims,
wherein, upon automated assembly of the images (Eᵢ) in step e), the margins of the individual images (Eᵢ) are adapted in particular by a local histogram adaptation to avoid artifacts at the interfaces between the assembled images (Eᵢ).

4. A device for providing a contrast-enhanced image (G) of a surface (4), including a contoured surface (4) of an undercarriage of a motor vehicle (2), comprising:
A) at least one image capturing device (14) configured for recording multiple overlapping images (Bᵢ) of the surface (4) using different light exposure and/or illumination while the motor vehicle (2) is moved over the image capturing device (14);
B) at least one illumination device (L) including an illumination matrix having a plurality of illumination elements (L1, L2) arranged in illumination rows (L1, L2), wherein the illumination device (L) is configured for illuminating the surface (4) in accordance with the motor vehicle movement by sequentially activating individual illumination rows (L1, L2) of the illumination matrix such that the surface (4) is illuminated from different illumination directions;
C) an image enhancer (AR1) which is configured
for automatically generating partial images (Tᵢ) of the overlapping areas from the recorded images (Bᵢ), wherein at least two partial images (Tᵢ) comprising the same region of the undercarriage (4) are generated from recorded images (Bᵢ) which have been recorded with different light exposure and/or illumination; and
for generating a contrast-enhanced image (Eᵢ) for each of the regions from the partial images (Tᵢ) of the respective region; and
D) an image synthesizer (AR2) which is configured for assembling the contrast-enhanced images (Eᵢ) generated for the individual regions of the surface (4) to form a contrast-enhanced total image (G) of the surface (4); wherein the image enhancer (AR1) is configured for generating a contrast-enhanced image (Eᵢ) for a region
by either automatically generating from at least two partial images (Tᵢ) each of the same region, which have been recorded with different light exposure and/or illumination, at least one synthetic intermediate image (Z₁), automatically identifying partial objects having optimum contrast in the partial images (Tᵢ) and in the synthetic intermediate images (Zᵢ) and taking the same over into the contrast-enhanced image (Eᵢ), or
by automatically generating at least one synthetic intermediate image (Y₁₁, Y₁₂, Y₂ᵢ) from at least two partial images (T₁) each of the same region, which have been recorded with different light exposure/ illumination, employing variance-based contrast adaptation, and automatically generating the contrast-enhanced image (Eᵢ) from adjacent synthetic intermediate images (Y₁₁, Y12, Y₂ᵢ) by employing variance-based contrast adaptation.

5. The device according to claim 4,
wherein the image enhancer (AR1), in generating the contrast-enhanced image (Ei) from the partial images (Ti), is configured to adapt the margins of the individual partial images (Ti) in order to avoid artifacts at the interfaces between the partial images (Ti).

6. The device according to claim 4 or 5,
wherein the image synthesizer (AR2) includes an image-margin adaptation device which is configured to adapt, upon assembly of the images (Eᵢ), the margins of the individual images (Eᵢ) in particular by a local histogram adaptation so as to avoid artifacts at the interfaces between the assembled images (Eᵢ).

7. The device according to any of claims 4 to 6,
wherein the device comprises at least one illumination device (L1, L2) configured for illuminating at least one region of the surface, the illumination device including in particular one or multiple illumination elements (L11-L18, L21-L28) and an illumination control device (AS) which is configured for controlling the at least one illumination element (L11-L18, L21-L28), wherein the illumination control device (AS) is configured in particular for adaptively controlling the at least one illumination element (L11-L18, L21-L28) by taking into account the recorded images in order to adjust an optimum illumination intensity.

## Revendications

1. Procédure de mise à disposition d'une image au contraste optimisé d'une surface profilée (4) du dessous de caisse (4) d'un véhicule à moteur (2), avec au moins un dispositif de capture d'images (14) et au moins un dispositif d'éclairage (L), qui présente une matrice d'éclairage avec plusieurs éléments d'éclairage (L11-L18, L21-L28) disposés en lignes d'éclairage (L1, L2), la procédure comprenant les étapes suivantes :
a) déplacement du véhicule à moteur (2) vis-à-vis du dispositif de capture d'images (14) et du dispositif d'éclairage (L) ;
b) éclairage de la surface avec le dispositif d'éclairage (L) de manière à ce que la surface (4) soit éclairée suivant le déplacement du véhicule à moteur par l'activation séquentielle de différentes lignes d'éclairage (L1, L2) de la matrice d'éclairage selon différentes directions d'éclairage ;
c) capture de plusieurs images se chevauchant (Bᵢ) de la surface (4) avec des expositions et/ou éclairages différents, tandis que le véhicule à moteur (2) est déplacé au-dessus du dispositif de capture d'images (14) ;
d) génération automatique d'images partielles (Tᵢ) des zones se chevauchant à partir des images capturées (Bᵢ), où au moins deux images partielles (Tᵢ) qui contiennent la même zone de la surface (4) sont générées à partir d'images capturées (Bᵢ), qui ont été prises avec des expositions et/ou éclairages différents ;
e) génération automatique d'une image au contraste optimisé (Eᵢ) pour chacune des zones à partir des images partielles (Tᵢ) de la zone correspondante ; et
f) agencement automatique des images au contraste optimisé (Eᵢ) générées en une image globale au contraste optimisé (G) de la surface (4),
sachant qu'à l'étape d) une image au contraste optimisé (Eᵢ) est générée pour une zone,
soit en ce qu'à partir d'au moins deux images partielles (Tᵢ) de la même zone, qui ont été capturées avec des expositions/éclairages différents, au moins une image intermédiaire synthétique (Z1) est générée automatiquement et que dans les images partielles (Tᵢ) et les images intermédiaires synthétiques (Zᵢ)
des objets partiels au contraste optimal sont automatiquement identifiés et intégrés à l'image au contraste optimisé (Eᵢ), soit en ce que,
en recourant à une adaptation du contraste basée sur la variance, à partir d'au moins deux images partielles (T₁, T₂) de la même zone, qui ont été capturées avec des expositions/ éclairages différents, au moins une image intermédiaire synthétique (Y₁₁, Y₁₂, Y₂ᵢ) est générée automatiquement et qu'à partir d'images intermédiaires synthétiques (Y₁₁, Y₁₂, Y₂ᵢ) voisines, l'image au contraste optimisé (Eᵢ) est générée automatiquement en recourant à une adaptation des contrastes basée sur la variance.

2. Procédé selon la revendication 1, dans lequel, lors de l'agencement des objets partiels à l'étape d), les bords des différents objets partiels sont adaptés afin d'éviter des artefacts aux interfaces entre les objets partiels agencés.

3. Procédé selon l'une quelconque des revendications précédentes, dans lequel, lors de l'agencement automatique des images (Eᵢ) à l'étape e), les bords des différentes images (Eᵢ) sont adaptés, en particulier par une adaptation locale de l'histogramme, afin d'éviter des artefacts aux interfaces entre les images (Eᵢ) agencées.

4. Dispositif de mise à disposition d'une image au contraste optimisé (G) d'une surface (4), y compris d'une surface profilée (4) du dessous de caisse (4) d'un véhicule à moteur (2), avec
A) au moins un dispositif de capture d'images (14) réalisé de manière à capturer plusieurs images se chevauchant (Bᵢ) de la surface (4) avec des expositions et/ou éclairages différents, tandis que le véhicule à moteur (2) est déplacé au-dessus du dispositif de capture d'images (14) ;
B) au moins un dispositif d'éclairage (L), qui présente une matrice d'éclairage avec plusieurs éléments d'éclairage (L1, L2) disposés en lignes d'éclairage (L1, L2), le dispositif d'éclairage (L) étant réalisé de manière à éclairer la surface (4) suivant le déplacement du véhicule à moteur, par l'activation séquentielle de différentes lignes d'éclairage (L1, L2) de la matrice d'éclairage, de sorte que la surface (4) soit éclairée selon différentes directions d'éclairage ;
C) un dispositif d'optimisation d'image (AR1) réalisé de manière à
générer automatiquement, à partir des images capturées (Bᵢ), des images partielles (Tᵢ) des zones se chevauchant, où au moins deux images partielles (Tᵢ) qui contiennent la même zone du dessous de caisse (4) sont générés à partir d'images (Bᵢ) qui ont été capturées avec des expositions et/ou éclairages différents ; et
générer pour chacune des zones une image au contraste optimisé (Eᵢ) à partir des images partielles (Tᵢ) de la zone correspondante ; et
D) un dispositif de synthèse d'image (AR2) réalisé de manière à agencer les images au contraste optimisé (Eᵢ) générées par le dispositif d'optimisation d'image (AR1) pour les différentes zones de la surface (4) pour en faire une image globale au contraste optimisé (G) de la surface (4) ;
sachant que le dispositif d'optimisation d'image (AR1) est réalisé de manière à générer une image au contraste optimisé (Eᵢ) pour une zone,
soit en ce qu'à partir d'au moins deux images partielles (Tᵢ) de la même zone, qui ont été capturées avec des expositions/éclairages différents, au moins une image intermédiaire synthétique (Z1) est générée automatiquement et que dans les images partielles (Tᵢ) et les images intermédiaires synthétiques (Zᵢ) des objets partiels au contraste optimal sont automatiquement identifiés et intégrés à l'image au contraste optimisé (Eᵢ), soit en ce que,
en recourant à une adaptation du contraste basée sur la variance, à partir d'au moins deux images partielles (Tᵢ) de la même zone, qui ont été capturées avec des expositions/éclairages différents, au moins une image intermédiaire (Y₁₁, Y₁₂, Y₂ᵢ) est générée automatiquement et qu'à partir d'images intermédiaires synthétiques (Y₁₁, Y₁₂, Y₂ᵢ) voisines, l'image au contraste optimisé (Eᵢ) est générée automatiquement en recourant à une adaptation du contraste basée sur la variance.

5. Dispositif selon la revendication 4, dans lequel le dispositif d'optimisation d'image (AR1) est réalisé de manière à adapter les bords des différentes images partielles (Tᵢ) lors de la génération de l'image au contraste optimisé (Eᵢ) à partir des images partielles (Tᵢ), afin éviter des artefacts aux interfaces entre les images partielles (Tᵢ).

6. Dispositif selon la revendication 4 ou 5, dans lequel le dispositif de synthèse d'image (AR2) englobe un dispositif d'adaptation des bords d'image, réalisé de manière à adapter, lors de l'agencement des images (Eᵢ), les bords des différentes images (Eᵢ), en particulier par une adaptation locale de l'histogramme, afin d'éviter des artefacts aux interfaces entre les images (Eᵢ) agencées.

7. Dispositif selon l'une quelconque des revendications 4 à 6, ce dispositif comprenant au moins un dispositif d'éclairage (L1, L2) réalisé de manière à éclairer au moins une zone de la surface, sachant que le dispositif d'éclairage comprend en particulier un ou plusieurs éléments d'éclairage (L11-L18, L21-L28) ainsi qu'un dispositif de commande de l'éclairage (AS) réalisé de manière à commander l'élément d'éclairage, un au moins (L11-L18, L21-L28), sachant que le dispositif de commande de l'éclairage (AS) est en particulier réalisé de manière à commander l'élément d'éclairage, un au moins (L11-L18, L21-L28) de manière adaptative en tenant compte des images capturées, afin de régler une intensité optimale de l'éclairage.
